# FASCICULE DE BREVET EUROPEEN

(11) **EP 2 721 310 B1**
(45) Date de publication et mention de la délivrance du brevet: **20.04.2016**
(21) Numéro de dépôt: 12734977.7
(22) Date de dépôt: 20.06.2012
(51) Int. Cl.: F16B 19/06, F16B 5/04, F16B 19/08

(54) **PROCÉDÉ DE FABRICATION D'UN ÉLÉMENT DE FIXATION**
VERFAHREN ZUR HERSTELLUNG EINES BEFESTIGUNGSELEMENTS
METHOD FOR PRODUCING AN ATTACHMENT ELEMENT

(30) Priorité: 20.06.2011 FR 1155363
(43) Date de publication de la demande: 23.04.2014
(73) Titulaire: Eris, 31130 Flourens (FR)
(72) Inventeur: AURIOL, Pierre, F-31130 Flourens (FR)
(74) Mandataire: Richebourg, Michel François
(86) Numéro de dépôt international: PCT/FR2012/051394
(87) Numéro de publication internationale: WO 2012/175873

(56) Documents cités:
- US-A- 4 681 499
- US-A- 4 695 213
- US-A- 4 712 958
- US-A- 4 749 323
- Anonymous: "7050 Aluminium material property data sheet", Metal Suppliers Online , 11 avril 2010 (2010-04-11), pages 1-4, XP002669019, Extrait de l'Internet: URL:http://www.suppliersonline.com/propert ypages/7050.asp [extrait le 2012-02-08]

## Description

### DOMAINE D'APPLICATION DE L'INVENTION

La présente invention a trait au domaine des éléments de fixation tels les rivets et notamment aux adaptations permettant d'en améliorer les caractéristiques mécaniques.

### DESCRIPTION DE L'ART ANTÉRIEUR

Il existe une pluralité de rivets et de procédés de fabrication dans l'art antérieur susceptibles de présenter les caractéristiques mécaniques souhaitées. Néanmoins, les critères de résistance à la fatigue et à l'arrachement auxquels doivent répondre les rivets sont de plus en plus exigeants.

Or, si une solution pour répondre à ces critères réside dans l'augmentation des dimensions du rivet, une telle augmentation présente l'inconvénient de l'apparition de criques.

### DESCRIPTION DE L'INVENTION

Partant de cet état de fait, la demanderesse a mené des recherches visant à apporter une solution aux critères les plus exigeants en ce qui concerne les critères de résistance à la fatigue et à l'arrachement d'une part, et à solutionner le problème technique de l'apparition des criques d'autre part.

Ces recherches ont abouti à la conception d'un procédé de fabrication à partir d'un fil de métal d'un élément de fixation du type de celui présentant une tige dont une première extrémité est équipée d'une tête, la deuxième extrémité étant destinée à être déformée pour former un bouton constituant une surface d'appui venant en vis à vis de celle formée par la tête, ladite tige présentant un diamètre nominal. Cet élément de fixation est dimensionné de sorte que la longueur minimale de tige destinée à être déformée pour former le bouton ne soit pas inférieure à 1,25 fois le diamètre nominal de la tige.

Selon l'invention est remarquable en ce qu'il consiste à
- à obtenir pour le fil de métal un grain de matériau adoptant une taille de 6 ou plus fin selon les critères définis par la norme ASTM E 112,
- à faire réaliser audit fil une étape d'écrouissage dont le taux est supérieur à 30 %, et
- à dimensionner ledit élément de sorte que le diamètre minimal du bouton obtenu après déformation de la tige est supérieur à 1,75 fois le diamètre nominal de la tige.

Ces caractéristiques assurent l'obtention d'un bouton et donc d'un élément de fixation présentant une bonne résistance à la fatigue.
L'obtention d'un grain plus fin requiert des opérations supplémentaires de travail sur le matériau, opérations rendant le procédé de réalisation du fil plus long et plus coûteux. Ainsi par exemple, l'écrouissage proposé doit être réalisé en plusieurs étapes. De plus un traitement thermique adéquat doit être mis en oeuvre.
Un homme de métier ne s'orienterait pas vers une telle solution nécessitant plus d'opérations et la maîtrise de ces opérations de fabrication du fil de base avant réalisation du rivet. Un homme de métier soumis au même problème technique privilégierait l'achat d'un matériau plus onéreux tel du titane pour l'obtention d'une fixation présentant les mêmes caractéristiques.

Selon une autre caractéristique particulièrement avantageuse de l'invention, le bouton obtenu après déformation de la tige présente une épaisseur maximale égale à 0,45 fois le diamètre nominal de la tige. Une telle épaisseur associée au diamètre ci-dessus défini permet d'obtenir un élément de fixation répondant aux critères de résistance à la fatigue et à l'arrachement.

L'invention concerne également le rivet présentant tout ou partie des caractéristiques ci-dessus décrites.

En addition des caractéristiques dimensionnelles et de grain présentées par le fil choisi pour la fabrication de l'élément de fixation de l'invention, d'autres caractéristiques permettant d'obtenir un élément de fixation répondant aux critères et sans présenter le risque de crique, ont également été conçues.

D'autres caractéristiques de ce procédé de fabrication se basent notamment sur la sélection des caractéristiques du fil à partir duquel est forgé l'élément de fixation et des matériaux devant composer ledit fil, lequel fil suit un procédé comportant des étapes spécifiques d'écrouissage, puis l'élément obtenu suit une étape de trempe etc...
Ce fil est un fil d'alliage d'aluminium qui, en addition du composé aluminium (Al) comprend des éléments additionnels tels que :
du Chrome symbolisé CR, du Cuivre symbolisé CU, du Fer symbolisé FE, du Magnésium symbolisé MG, du Manganèse symbolisé MN, du Silicium symbolisé SI, du Titane symbolisé TI, du Zinc symbolisé ZN, du Zirconium symbolisé ZR, etc.. Les proportions ci-dessous décrites sont des pourcentages minimal ou maximal des éléments seuls ou d'une combinaison d'éléments. Ces compositions permettent d'assumer les propriétés mécaniques recherchées pour une fixation tout en évitant la présence de criques notamment grâce à la teneur en cuivre. Elles permettent également de réaliser l'écrouissage voulu et d'obtenir ainsi le grain fin souhaité.

Ainsi, selon une caractéristique particulièrement avantageuse, le procédé de fabrication de l'invention est remarquable en ce qu'il consiste à sélectionner pour le fil de métal à partir duquel est formé l'élément de fixation, un alliage d'aluminium dont les éléments additionnels à l'aluminium, adoptent en pourcentage les proportions suivantes :

| | mini | maxi |
|---|---|---|
| CR | 0 | 0,04 |
| CU | 2 | 2,5 |
| FE | 0,011 | 0,14 |
| MG | 2,04 | 2,3 |
| NN | 0 | 0,05 |
| SI | 0,02 | 0,12 |
| TI | 0,02 | 0,06 |
| ZN | 6,1 | 6,7 |
| ZR | 0,08 | 0,15 |

Selon une autre caractéristique particulièrement avantageuse, le procédé consiste à sélectionner pour le fil de métal à partir duquel est formé l'élément de fixation, un alliage d'aluminium dont les éléments additionnels à l'aluminium, adoptent en pourcentage les proportions suivantes :

| | mini | maxi |
|---|---|---|
| CR | 0,05 | 0,1 |
| CU | 2,6 | 3 |
| FE | 0,34 | 0,5 |
| MG | 0,33 | 0,5 |
| MN | 0,1 | 0,2 |
| SI | 0,32 | 0,8 |
| TI | 0 | 0,01 |
| ZN | 0,1 | 0,17 |
| FE-MN | 0,47 | 0,68 |
| TI-ZR | 0,05 | 0,15 |

Selon une autre caractéristique particulièrement avantageuse, le procédé consiste à sélectionner pour le fil de métal à partir duquel est formé l'élément de fixation, un alliage d'aluminium dont les éléments additionnels à l'aluminium, adoptent en pourcentage les proportions suivantes :

| | mini | maxi |
|---|---|---|
| CR | 0 | 0,03 |
| CU | 3,5 | 4,3 |
| FE | 0,016 | 0,3 |
| MG | 0,43 | 0,65 |
| M/N | 0,41 | 0,63 |
| SI | 0,21 | 0,4 |
| TI | 0,005 | 0,08 |
| ZN | 0,002 | 0,04. |

L'état du fil fait l'objet également d'autres sélections spécifiques. Par exemple, selon une caractéristique particulièrement avantageuse, le procédé consiste à sélectionner un fil qui ne présente pas des inclusions (entailles isolées, abrasions, piqûres de corrosion, inclusions mineures isolées, replis, rayures non continues, marques d'outillage, bavures, etc... dont la profondeur est supérieure à 0,15 millimètres. De plus, le procédé consiste à sélectionner un fil dont la profondeur des défauts continus longitudinaux ne dépasse pas les 40 microns.

Une autre caractéristique de ce procédé concerne l'étape de trempe. Selon un choix technologique, le procédé consiste à faire subir audit élément, une étape refroidissement où le temps de transfert des éléments de fixation d'un milieu où la température correspond à celle de la mise en solution à un milieu où la température est de 20 degrés Celcius est inférieur à 5 secondes.

Enfin, selon une autre caractéristique, le procédé consiste à faire subir audit élément, une étape de trempe où la variation de température lors de la trempe d'un même lot d'éléments ne dépasse pas les 5 degrés Celcius.

Selon une autre caractéristique particulièrement avantageuse de l'invention, le rayon en bout de tige de l'élément de fixation, c'est à dire le rayon de liaison entre la surface cylindrique de la type et la surface plane de l'extrémité de tige, est proportionnel au diamètre de la tige elle-même selon une proportion où ledit rayon est égal au diamètre nominal de la tige divisé par une valeur comprise entre 3 et 3,5.

Un rivet présentant une association de ces caractéristiques dans son procédé de fabrication permet non seulement de répondre aux critères de résistance à la fatigue et à l'arrachement mais également d'éviter la présence de criques.

Une autre caractéristique participant à l'obtention d'une fixation sans crique réside dans la sélection dans les fixations fabriquées d'une fixation où la tige notamment au niveau de la partie devant être déformée, c'est à dire au niveau du rayon de bout de tige, ne présente pas de défauts continus longitudinaux supérieurs à 40 microns.

Il apparaît ainsi que l'invention réside dans une succession de sélections de caractéristiques aussi bien en amont de la fabrication de l'élément de fixation par exemple dans le choix des caractéristiques du fil de base qu'en aval c'est à dire non seulement dans les dimensions finales mais également dans l'état de surface final de l'élément de fixation obtenu.

L'invention concerne donc également l'élément de fixation obtenu selon tout ou partie des caractéristiques du procédé ci-dessus décrit.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un élément de fixation conforme à l'invention.

### BRÈVE DESCRIPTION DES DESSINS

La figure 1 est un dessin schématique d'une vue en coupe d'un mode de réalisation de rivet conforme à l'invention installé dans un orifice traversant deux pièces à assembler;

La figure 2 illustre l'assemblage réalisé à partir du mode de réalisation de la figure 1.

### DESCRIPTION DES MODES DE RÉALISATION PRÉFÉRÉS

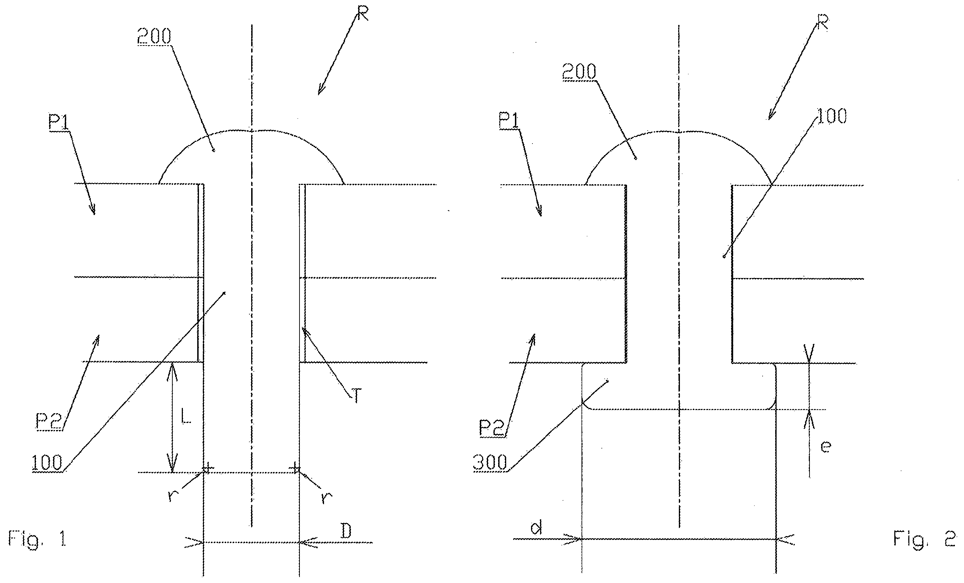

Tel qu'illustré sur le dessin de la figure 1, le rivet R est installé dans un trou T traversant deux plaques P1 et P2 à assembler. Ce rivet R présente une tige 100 dont une première extrémité est équipée d'une tête 200, la deuxième extrémité étant destinée à être déformée pour former un bouton 300 (cf figure 2) constituant une surface d'appui venant en vis à vis de celle formée par la tête 200, ladite tige présentant un diamètre nominal D. Comme illustré avant déformation, une partie de la tige 100 du rivet R se projette hors du trou T. Conformément à l'invention, afin de remplir les critères de résistance à la fatigue et à l'arrachement, le rivet R est dimensionné de sorte que la longueur minimale L de tige destinée à être déformée pour former le bouton 300, c'est à dire la longueur minimale de tige saillant hors du trou T égale 1,25 fois le diamètre nominal D de la tige 100.

Selon une autre caractéristique particulièrement avantageuse de l'invention, le bouton 300 obtenu après déformation de la tige 100 présente une épaisseur e maximale égale à 0,45 fois le diamètre nominal D de la tige.

Selon une autre caractéristique, le diamètre minimal d du bouton 300, obtenu après déformation, est supérieur à 1,75 fois le diamètre nominal D.

Enfin, le rayon r en bout de tige de l'élément de fixation est égal au diamètre nominal D de la tige divisé par une valeur comprise entre 3 et 3,5.

On comprend que l'élément de fixation et le procédé, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé de fabrication à partir d'un fil de métal d'un élément de fixation (R) du type de celui présentant une tige (100) dont une première extrémité est équipée d'une tête (200), la deuxième extrémité étant destinée à être déformée pour former un bouton (300) constituant une surface d'appui venant en vis à vis de celle formée par la tête (200), ladite tige (100) présentant un diamètre nominal (D),
ledit élément étant dimensionné de sorte que la longueur (L) minimale de tige (100) destinée à être déformée pour former le bouton (300) n'est pas inférieure à 1,25 fois le diamètre nominal (D) de la tige (100),
**CARACTÉRISÉ EN CE QU'**il consiste à
- à obtenir pour le fil de métal un grain de matériau, adoptant une taille de 6 ou plus fin selon les critères définis par la norme ASTM E 112,
- à faire réaliser audit fil une étape d'écrouissage dont le taux est supérieur à 30 %, et
- à dimensionner ledit élément de sorte que le diamètre (d) minimal du bouton (300) obtenu après déformation de la tige (100) est supérieur à 1,75 fois le diamètre nominal (D) de la tige (100).

2. Procédé selon la revendication 1, **CARACTERISE EN CE QU'**il consiste à dimensionner ledit élément de sorte que le bouton (300) obtenu après déformation de la tige (100) présente une épaisseur (e) maximale égale à 0,45 fois le diamètre nominal (D) de la tige (100).

3. Procédé (R) selon l'une quelconque des revendications 1 à 2, **CARACTERISE EN CE QUE** ledit élément est constitué par un rivet.

4. Procédé selon l'une quelconque des revendications 1 à 3, **CARACTÉRISÉ EN CE QU'**il consiste à sélectionner pour le fil de métal à partir duquel est formé l'élément (R), un alliage d'aluminium dont les éléments additionnels à l'aluminium, adoptent en pourcentage les proportions suivantes :
| | mini | maxi |
|---|---|---|
| CR | 0 | 0,04 |
| CU | 2 | 2,5 |
| FE | 0,011 | 0,14 |
| MG | 2,04 | 2,3 |
| MN | 0 | 0,05 |
| SI | 0,02 | 0,12 |
| TI | 0,02 | 0,06 |
| ZN | 6,1 | 6,7 |
| ZR | 0,08 | 0,15 |

5. Procédé selon l'une quelconque des revendications 1 à 3, **CARACTÉRISÉ EN CE QU'**il consiste à sélectionner pour le fil de métal à partir duquel est formé l'élément (R), un alliage d'aluminium dont les éléments additionnels à l'aluminium, adoptent en pourcentage les proportions suivantes :
| | mini | maxi |
|---|---|---|
| CR | 0,05 | 0,1 |
| CU | 2,6 | 3 |
| FE | 0,34 | 0,5 |
| MG | 0,33 | 0,5 |
| MN | 0,1 | 0,2 |
| SI | 0,32 | 0,8 |
| TI | 0 | 0,01 |
| ZN | 0,1 | 0,17 |
| FE-MN | 0,47 | 0,68 |
| TI-ZR | 0,05 | 0,15 |

6. Procédé selon l'une quelconque des revendications 1 à 3, **CARACTÉRISÉ EN CE QU'**il consiste à sélectionner pour le fil de métal à partir duquel est formé l'élément (R), un alliage d'aluminium dont les éléments additionnels à l'aluminium adoptent en pourcentage les proportions suivantes :
| | mini | maxi |
|---|---|---|
| CR | 0 | 0,03 |
| CU | 3,5 | 4,3 |
| FE | 0,016 | 0,3 |
| MG | 0,43 | 0,65 |
| MN | 0,41 | 0,63 |
| SI | 0,21 | 0,4 |
| TI | 0,005 | 0,08 |
| ZN | 0,002 | 0,04 |

7. Procédé selon selon la revendication 1, **CARACTÉRISÉ EN CE QU'**il consiste à sélectionner un fil qui ne présente pas des inclusions (entailles isolées, abrasions, piqûres de corrosion, inclusions mineures isolées, replis, rayures non continues, marques d'outillage, bavures, etc... de profondeur supérieure à 0,15 millimètres.

8. Procédé selon la revendication 1, **CARACTÉRISÉ EN CE QU'**il consiste à sélectionner un fil dont la profondeur des défauts continus longitudinaux ne dépasse pas les 40 microns.

9. Procédé selon selon la revendication 1, **CARACTÉRISÉ EN CE QU'**il consiste à faire subir audit élément (R), une étape refroidissement où le temps de transfert des éléments de fixation d'un milieu où la température correspond à celle de la mise en solution à un milieu où la température est de 20 degrés Celcius est inférieur à 5 secondes.

10. Procédé selon la revendication 1, **CARACTÉRISÉ EN CE QU'**il consiste à faire subir audit élément (R), une étape de trempe où la variation de température lors de la trempe d'un même lot d'éléments (R) ne dépasse pas les 5 degrés Celcius.

11. Procédé selon la revendication 1, **CARACTÉRISÉ PAR LE FAIT QUE** l'élément de fixation est dimensionné de sorte que le rayon en bout de tige (r) est proportionnel au diamètre de la tige (D) elle-même selon une proportion où ledit rayon est égal au diamètre nominal de la tige divisé par une valeur comprise entre 3 et 3,5.

## Patentansprüche

1. Verfahren zum Herstellen ausgehend von einem Metalldraht eines Befestigungselements (R) des Typs, der einen Schaft (100) aufweist, von dem ein erstes Ende mit einem Kopf (200) ausgestattet ist, wobei das zweite Ende dazu bestimmt ist, verformt zu werden, um einen Knopf (300) zu bilden, der eine Auflageoberfläche bildet, die zu der in Gegenüberlage kommt, die von dem Kopf (200) gebildet wird, wobei der Schaft (100) einen Nenndurchmesser (D) aufweist,
wobei das Element derart bemessen ist, dass die Mindestlänge (L) des Schafts (100), die dazu bestimmt ist, verformt zu werden, um den Knopf (300) zu bilden, nicht kleiner 1,25 Mal der Nenndurchmesser (D) des Schafts (100) ist,
**dadurch gekennzeichnet, dass** es darin besteht,
- für den Metalldraht eine Materialkörnung zu erhalten, die eine Größe von 6 oder feiner gemäß den von der Norm ASTM E 112 definierten Kriterien annimmt,
- an dem Draht einen Kalthärtungsschritt auszuführen, dessen Rate größer ist als 30 %, und
- das Element derart zu bemessen, dass der Mindestdurchmesser (d) des Knopfs (300), der nach Verformung des Schafts (100) erhalten wird, größer ist als 1,75 Mal der Nenndurchmesser (D) des Schafts (100).

2. Verfahren nach Anspruch 1, **dadurch gekennzeichnet, dass** es darin besteht, das Element derart zu bemessen, dass der Knopf (300), der nach Verformung des Schafts (100) erhalten wird, eine maximale Stärke (e) gleich 0,45 Mal dem Nenndurchmesser (D) des Schafts (100) aufweist.

3. Verfahren (R) nach einem der Ansprüche 1 bis 2, **dadurch gekennzeichnet, dass** das Element aus einer Niete besteht.

4. Verfahren nach einem der Ansprüche 1 bis 3, **dadurch gekennzeichnet, dass** es darin besteht, für den Metalldraht, aus dem das Element (R) gebildet wird, eine Aluminiumlegierung auszuwählen, deren Zusatzelemente zu dem Aluminium prozentual die folgenden Anteile annehmen:
| min. | max. | |
|---|---|---|
| Cr | 0 | 0,04 |
| Cu | 2 | 2,5 |
| Fe | 0,011 | 0,14 |
| Mg | 2,04 | 2,3 |
| Mn | 0 | 0,05 |
| Si | 0,02 | 0,12 |
| Ti | 0,02 | 0,06 |
| Zn | 6,1 | 6,7 |
| Zr | 0,08 | 0,15 |

5. Verfahren nach einem der Ansprüche 1 bis 3, **dadurch gekennzeichnet, dass** es darin besteht, für den Metalldraht, aus dem das Element (R) gebildet wird, eine Aluminiumlegierung auszuwählen, deren Zusatzelemente zu dem Aluminium prozentual die folgenden Anteile annehmen:
| min. | max. | |
|---|---|---|
| Cr | 0,05 | 0,1 |
| Cu | 2,6 | 3 |
| Fe | 0,34 | 0,5 |
| Mg | 0,33 | 0,5 |
| Mn | 0,1 | 0,2 |
| Si | 0,32 | 0,8 |
| Ti | 0 | 0,01 |
| Zn | 0,1 | 0,17 |
| Fe-Mn | 0,47 | 0,68 |
| Ti-Zr | 0,05 | 0,15 |

6. Verfahren nach einem der Ansprüche 1 bis 3, **dadurch gekennzeichnet, dass** es darin besteht, für den Metalldraht, aus dem das Element (R) gebildet wird, eine Aluminiumlegierung auszuwählen, deren Zusatzelemente zu dem Aluminium prozentual die folgenden Anteile annehmen:
| min. | max. | |
|---|---|---|
| Cr | 0 | 0,03 |
| Cu | 3,5 | 4,3 |
| Fe | 0,016 | 0,3 |
| Mg | 0,43 | 0,65 |
| Mn | 0,41 | 0,63 |
| Si | 0,21 | 0,4 |
| Ti | 0,005 | 0,08 |
| Zn | 0,002 | 0,04 |

7. Verfahren nach Anspruch 1, **dadurch gekennzeichnet, dass** es darin besteht, einen Draht auszuwählen, der keine Einschlüsse (vereinzelte Einschnitte, Abrieb, einfressenden, geringfügige vereinzelte Einschlüsse, Falten, nicht kontinuierliche Kratzer, Werkzeugmarkierungen, Grate usw.) mit einer Tiefe größer als 0,15 Millimeter aufweist.

8. Verfahren nach Anspruch 1, **dadurch gekennzeichnet, dass** es darin besteht, einen Draht auszuwählen, dessen Tiefe der kontinuierlichen Längsfehler 40 Mikrometer nicht überschreitet.

9. Verfahren nach Anspruch 1, **dadurch gekennzeichnet, dass** es darin besteht, das Element (R) einem Kühlschritt zu unterziehen, bei dem die Transferzeit der Befestigungselemente von einem Milieu, in dem die Temperatur der der Herstellung der Lösung entspricht, zu einem Milieu, in dem die Temperatur 20 Grad Celsius beträgt, kleiner ist als 5 Sekunden.

10. Verfahren nach Anspruch 1, **dadurch gekennzeichnet, dass** es darin besteht, das Element (R) einem Abschreckhärtungsschritt zu unterziehen, bei dem die Temperaturvariation bei dem Abschreckhärten ein und derselben Charge von Elementen (R) 5 Grad Celsius nicht überschreitet.

11. Verfahren nach Anspruch 1, **dadurch gekennzeichnet, dass** das Befestigungselement derart bemessen ist, dass der Radius am Ende des Schafts (r) zu dem Durchmesser des Schafts (D) selbst gemäß einem Anteil proportional ist, indem der Radius gleich dem Nenndurchmesser des Schafts geteilt durch einen Wert zwischen 3 und 3,5 ist.

## Claims

1. Method for manufacturing, using a metal wire, a fastening element (R) such as that having a shank (100) wherein a first end is equipped with a head (200), the second end being intended to be deformed to act as a knob (300) forming a bearing surface to be positioned facing that formed by the head (200), said shank (100) having a nominal diameter (D),
said element being designed such that the minimum length (L) of the shank (100) intended to be deformed to act as the knob (300) is not less than 1.25 times the nominal diameter (D) of the shank (100),
**characterized in that** it consists of
- obtaining, for the metal wire, a material grain adopting a size of 6 or finer according to the criteria defined by the ASTM E 112 standard,
- performing, on said wire, a work-hardening step wherein the rate is greater than 30%, and
- designing said element such that the minimum diameter (d) of the knob (300) obtained after deforming the shank (100) is greater than 1.75 times the nominal diameter (D) of the shank (100).

2. Method according to claim 1, **characterized in that** it consists of designing said element such that the knob (300) obtained after deforming the shank (100) has a maximum thickness (e) equal to 0.45 times the nominal diameter (D) of the shank (100).

3. Method (R) according to any of claims 1 to 2, **characterized in that** said element consists of a rivet.

4. Method according to any of claims 1 to 3, **characterized in that** it consists of selecting, for the metal wire from which the element (R) is formed, an aluminum alloy wherein the additional elements to aluminum adopt as a percentage the following proportions:
| | min | max |
|---|---|---|
| CR | 0 | 0.04 |
| CU | 2 | 2.5 |
| FE | 0.011 | 0.14 |
| MG | 2.04 | 2.3 |
| MN | 0 | 0.05 |
| SI | 0.02 | 0.12 |
| TI | 0.02 | 0.06 |
| ZN | 6.1 | 6.7 |
| ZR | 0.08 | 0.15 |

5. Method according to any of claims 1 to 3, 15**characterized in that** it consists of selecting, for the metal wire from which the fastening element (R) is formed, an aluminum alloy wherein the additional elements to aluminum adopt as a percentage the following proportions:
| | min | max |
|---|---|---|
| CR | 0.05 | 0.1 |
| CU | 2.6 | 3 |
| FE | 0.34 | 0.5 |
| MG | 0.33 | 0.5 |
| MN | 0.1 | 0.2 |
| SI | 0.32 | 0.8 |
| TI | 0 | 0.01 |
| ZN | 0.1 | 0.17 |
| FE-MN | 0.47 | 0.68 |
| TI-ZR | 0.05 | 0.15 |

6. Method according to any of claims 1 to 3, **characterized in that** it consists of selecting, for the metal wire from which the fastening element (R) is formed, an aluminum alloy wherein the additional elements to aluminum adopt as a percentage the following proportions:
| | min | max |
|---|---|---|
| CR | 0 | 0.03 |
| CU | 3.5 | 4.3 |
| FE | 0.016 | 0.3 |
| MG | 0.43 | 0.65 |
| MN | 0.41 | 0.63 |
| SI | 0.21 | 0.4 |
| TI | 0.005 | 0.08 |
| ZN | 0.002 | 0.04 |

7. Method according to claim 1, **characterized in that** it consists of selecting a wire which does not have inclusions (isolated nicks, abrasions, pitting, isolated minor inclusions, cold shuts, non-continuous scratches, tool marks, burrs, etc.) greater than 0.15 millimeters in depth.

8. Method according to claim 1, **characterized in that** it consists of selecting a wire wherein the depth of longitudinal continuous defects does not exceed 40 microns.

9. Method according to claim 1, **characterized in that** it consists of subjecting said element (R) to a cooling step wherein the time for transferring the fastening elements from one medium wherein the temperature is equivalent to that of solution to a medium wherein the temperature is 20 degrees Celsius is less than 5 seconds.

10. Method according to claim 1, **characterized in that** it consists of subjecting said element (R) to a quenching step wherein the temperature variation during the quenching of the same batch of elements (R) does not exceed 5 degrees Celsius.

11. Method according to claim 1, **characterized in** 5that the fastening element is designed such that the shank end radius (r) is proportional to the diameter of the shank (D) itself according to a proportion wherein said radius is equal to the nominal diameter of the shank divided by a value ranging between 3 and 3.5.
